# EUROPEAN PATENT SPECIFICATION

(11) **EP 3 680 516 B1**
(45) Date of publication and mention of the grant of the patent: **02.08.2023**
(21) Application number: 18854630.3
(22) Date of filing: 27.06.2018
(51) Int. Cl.: F16H 55/26, B21J 5/02, B21J 13/14, B21K 1/76, B62D 3/12, B21J 13/02

(54) **MANUFACTURING METHOD FOR A METAL RACK**
HERSTELLUNGSVERFAHREN FÜR EINE METALLISCHE ZAHNSTANGE
PROCÉDÉ DE FABRICATION DE CRÉMAILLÈRE MÉTALLIQUE

(30) Priority: 07.09.2017 JP 2017171712
(43) Date of publication of application: 15.07.2020
(73) Proprietor: NSK Ltd., Tokyo 141-8560 (JP)
(72) Inventor: MIZUSHIMA, Yuuki, Fujisawa-shi Kanagawa 251-8501 (JP); KOBAYASHI, Tatsuya, Fujisawa-shi Kanagawa 251-8501 (JP)
(74) Representative: Grünecker Patent- und Rechtsanwälte PartG mbB
(86) International application number: PCT/JP2018/024460
(87) International publication number: WO 2019/049477

(56) References cited:
- EP-B1- 1 107 840
- WO-A1-2011/140580
- WO-A1-2016/031323
- DE-A1-102008 054 687
- JP-A- S6 444 501
- JP-A- 2008 138 864
- JP-A- 2011 255 834
- US-A1- 2017 225 703

## Description

### TECHNICAL FIELD

The present invention relates to a method of manufacturing a metal rack that is assembled in a rack and pinion steering gear unit and the like. The present invention further relates to a method for manufacturing a steering device and a vehicle that are incorporated with this rack.

### BACKGROUND ART

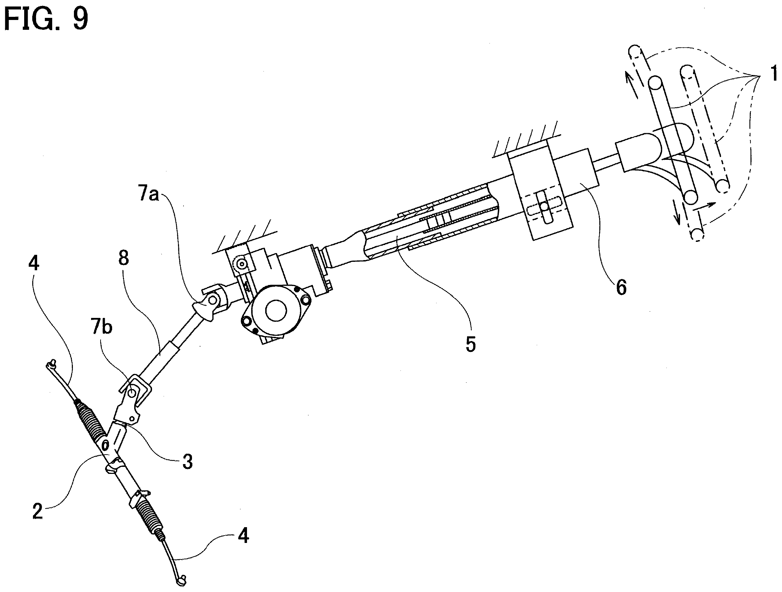

FIG. 9 represents an example of a conventional structure of a steering device for an automobile. The steering wheel 1 is supported by and fastened to the back end portion of a steering shaft 5. The steering shaft 5 is rotatably supported by a steering column 6 in a state where it is inserted in the cylindrical steering column 6 in the axial direction. The front end portion of the steering shaft 5 is connected to the back end portion of an intermediate shaft 8 by way of a universal joint 7a. The front end portion of the intermediate shaft 8 is connected to an input shaft 3 of the rack and pinion steering gear unit 2 by way of another universal joint 7b. With this kind of construction, the rotation of the steering wheel 1 is transmitted to the input shaft 3 of the steering gear unit 2, and the right-and-left tie rods 4 are pushed and pulled as the input shaft 3 rotates so as to apply a steering angle to the front wheels.

The steering gear unit 2 is constructed by combining a pinion that has pinion teeth on the outer circumferential surface and is supported by and fastened to the tip end portion of the input shaft 3 and a rack that has rack teeth on one side surface that meshes with the pinion teeth.

When such a rack is manufactured by performing a cutting process to a material made of metal, the manufacturing cost increases and it becomes difficult to maintain the strength and rigidity of the rack teeth. On the other hand, when the rack teeth are formed by plastically deforming a material made of metal, the manufacturing cost can be reduced by shortening the time required for processing the teeth, and, the metal structure of the obtained rack teeth becomes dense, so it becomes easy to maintain the strength and rigidity of the rack teeth.

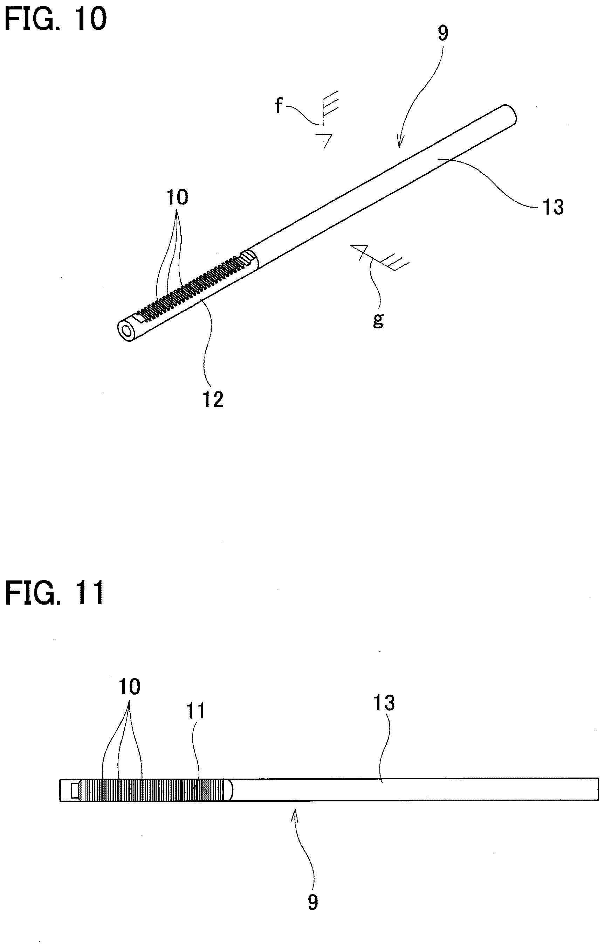

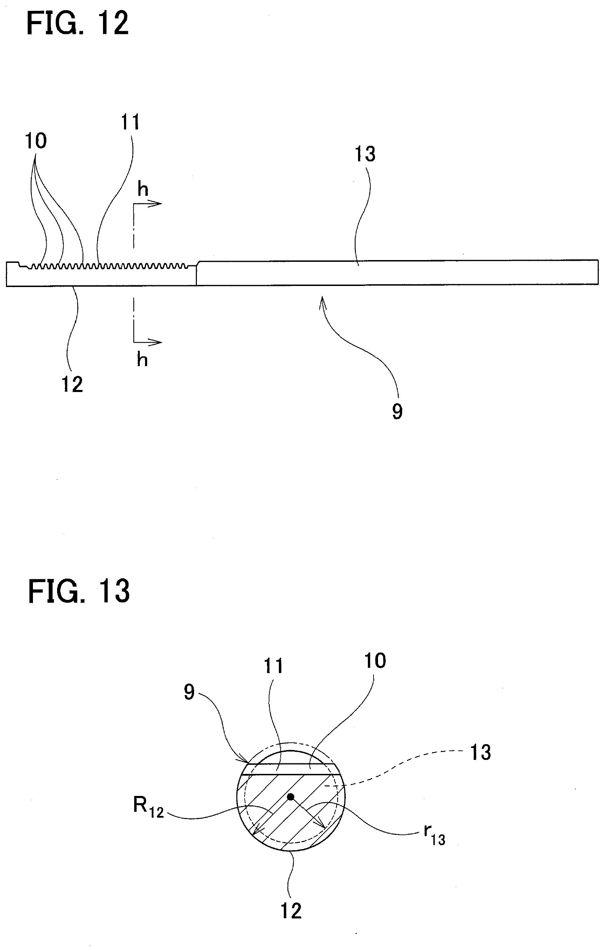

FIG. 10 through FIG. 15 represent a rack and a method for manufacturing a rack that is disclosed in JP 2008-138864 (A). Rack 9 is made of metal material such as carbon steel and stainless steel, and the entire body is made as a rod-like shape. The rack 9 has rack teeth section 11 provided with having uniformly spaced plural rack teeth 10 on one side surface (front surface, upper surface of FIGs. 10 and 12, or front side surface of FIG. 11) of one side section in the axial direction (left side section in FIGs. 10 to 12).

In the example shown in the figures, of the one side section in the axial direction of the rack 9, the radius of curvature R₁₂ of the cross-sectional shape of the other side surface (back surface) 12 that is out from the rack teeth section 11 in the circumferential direction (see FIG. 13) is larger than the radius of curvature r₁₃ of the outer circumferential surface of the circular rod section 13 having a circular cross-sectional shape (see FIG. 13) that exists on the other side section (right side section in FIGs. 10-12) in the axial direction of the rack 9 (R₁₂ > r₁₃). Thereby, it is possible to make the rack 9 more lightweight by keeping the outer diameter of the other side section in the axial direction of the rack 9 from becoming larger than necessary, while sufficiently maintaining the width dimension, strength, and rigidity of the rack teeth section 11.

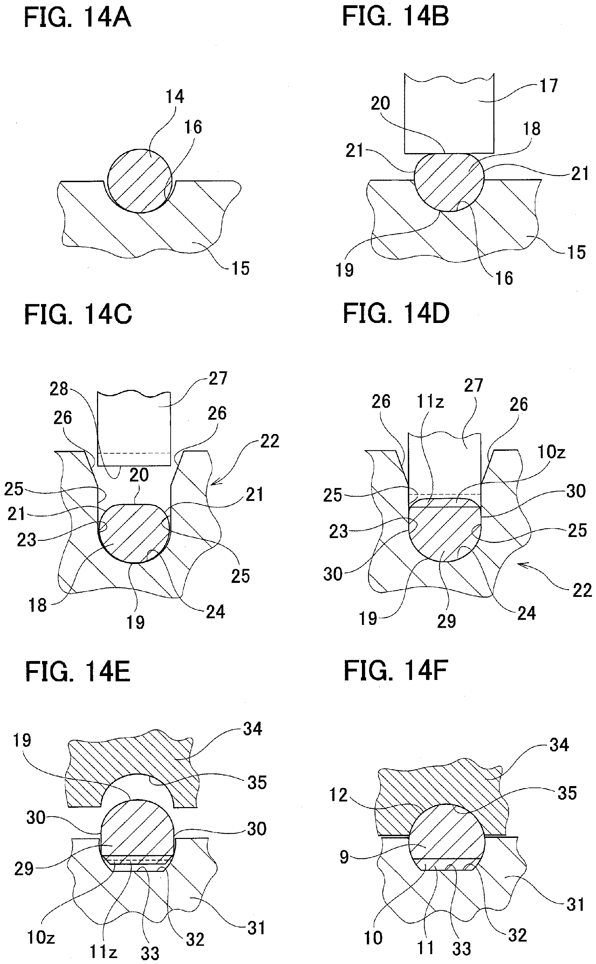

The rack 9 is manufactured by the following steps. First, as shown in FIG. 14(A), round rod-like shaped material 14 which is made of metal such as carbon steel and stainless steel is set in the first cavity 16 having a substantially semi-circular shaped cross-sectional shape which is provided in the upper surface of a preforming die 15. In the following preforming process, as shown in FIG. 14(B), the material 14 is strongly pressed toward the first cavity 16 by a preforming punch 17. Then, by widening the width dimension in the horizontal direction while crushing the one side section in the axial direction of the material 14 in the up-down direction, the material 14 is processed to an intermediate material 18. The outer circumferential surface of the one side section in the axial direction of the intermediate material 18 comprises a partial cylindrical surface section 19 which becomes the rear portion 12 in the finished state, a flat planar to-be-processed surface section 20 that exists on the opposite side from the partial cylindrical surface section 19 with respect to the up-down direction, and a pair of curved surface sections 21 having a relatively small radius of curvature that continuously connects the partial cylindrical surface section 19 and the to-be-processed surface section 20.

Next, the intermediate material 18 is removed from the first cavity 16 of the preforming die 15 and is sent to the next teeth-forming process. In the teeth-forming process, first, as illustrated in FIG. 14(C), the intermediate material 18 is placed at the bottom section 24 of the second cavity 23 having a U-shaped cross-sectional shape and provided in the teeth-forming die 22 so as to open to the upper surface of the teeth-forming die 22. The radius of curvature of the bottom section 24 is nearly the same as the radius of curvature of the inner surface of the first cavity 16. A pair of inside surfaces 25 of the second cavity 23 is flat surfaces that are parallel to each other. Further, a pair of inclined guide surfaces 26 inclined in a direction so that the space between them increases going upward is provided at the upper end opening section of the second cavity 23.

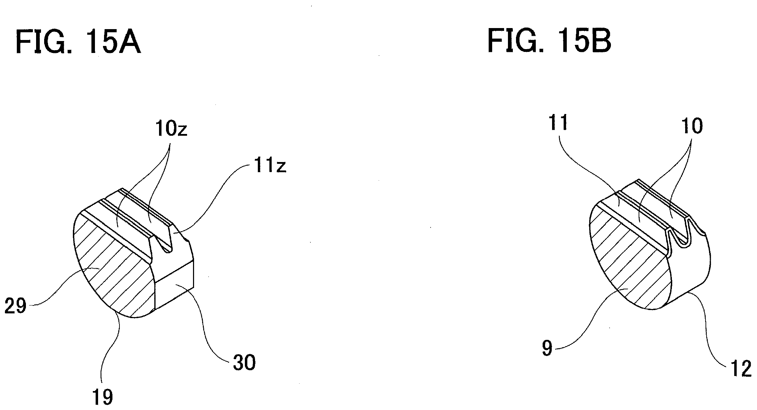

After setting the intermediate material 18 in the bottom section 24 of the second cavity 23, as illustrated in FIGs. 14(C) and 14(D), the tip end portion of a teeth-forming punch 27 is inserted into the second cavity 23 and this teeth-forming punch 27 strongly presses the intermediate member 18 toward the bottom section 24 of the second cavity 23. The processing surface (bottom surface in FIG. 14(C)) of the teeth-forming punch 27 has teeth-forming concave and convex portions 28 having concave and convex shapes that correspond to the rack teeth 10 to be obtained. Moreover, the outer-circumferential surface of the intermediate material 18, except for the to-be-processed surface section 20 where the raw rack teeth 10z are to be formed in a state where forming is finished, is constrained by the inner surface of the second cavity 23. Therefore, by the teeth-forming punch 27 strongly pressing the intermediate material 18 toward the bottom section 24 of the second cavity 23, the to-be-processed surface section 20 of the intermediate material 18 is plastically deformed following the teeth-forming concave and convex portions 28. Moreover, as the intermediate material 18 is crushed in the up-down direction and the width dimension in the horizontal direction extends, the pair of curved surface sections 21 is pressed to the inside surface 25 of the second cavity 23. As a result, a raw rack 29 such as illustrated in FIGs. 14(D) and 15(A) can be obtained. The raw rack 29 has raw rack teeth section 11z comprising a plurality of raw rack teeth 10z on one side section in the axial direction, and has a pair of flat surface sections 30 that are parallel to each other on both side sections of the raw rack teeth section 11z in relation to the circumferential direction of the outer circumferential surface of the one side section in the axial direction.

Then, the teeth-forming punch 27 is raised and the raw rack 29 is removed from the second cavity 23 and is sent to the following finishing forming process. In the finishing forming process, as illustrated in FIG. 14(E), the raw rack 29 is turned upside down and is set to the receiving-side cavity 32 of the finishing forming receiving die 31. The receiving-side cavity 32 has a finishing forming concave and convex portion 33 in the bottom surface. The finishing forming concave and convex portion 33 has a shape that corresponds to the shape of the rack teeth 10 to be obtained, including the shape of the chamfer sections on the end edges of the teeth, that is, a shape concave and convex are reversed in relation to the finished shape of the rack teeth 10.

As illustrated in FIGs. 14(E) and 14(F), the raw rack 29 is pressed from the up-down direction so as to be crushed between the finishing forming receiving die 31 and the finishing forming pressing die 34. The finishing forming pressing die 34 has a pressing-side cavity 35 that is open to the bottom surface and has a radius of curvature of the cross-sectional shape which corresponds to the radius of curvature R₁₂ (see FIG. 13) of the rear portion 12 of the completed rack 9. That is, when crushing the raw rack 29 between the finishing forming receiving die 31 and the finishing forming pressing die 34, the rear face section 12 of the raw rack 29 is engaged to the pressing-side cavity 35 without looseness. Therefore, as illustrated in FIG. 14(F), in a state where the finishing forming receiving die 31 and finishing forming pressing die 34 are sufficiently close, each of rack teeth 10 becomes a complete state where the shape and dimensions become proper and the chamfers are provided on the end edges, and where the shape and dimensions of the rear portion 12 also become proper at the same time. The excess material that was pressed out due to the finishing forming is collected in the pair of flat surface sections 30. Therefore, the pair of flat surface sections 30 hardly remains in the completed rack 9. When doing this, the extra material does not apply extremely strong pressure against the finishing forming concave and convex section 33 or the inside surface of the pressing-side cavity 35, so the processing load during finishing forming is kept low, and it is easy to maintain the durability of the finishing forming receiving die 31 and finishing forming pressing die 34.

### [Prior Art Documents]

### [Patent Literature]

[Patent Literature 1] JP 2008-138864 (A)
[Patent Literature 2] JP 2009-178716 (A)

### SUMMARY OF INVENTION

### [Problem to be solved by the Invention]

In the manufacturing method described in JP 2008-138864 (A), there is room for improvement from a view of reducing the manufacturing cost. That is, in the method of JP 2008-138864 (A), in the teeth-forming process, as the raw rack teeth 10z are formed, the excess material that was pushed out from the concave portions that exist between the raw rack teeth 10z that are adjacent in the axial direction goes to the both side sections in the width direction of each raw rack teeth 10. However, when forming the raw rack teeth 10z, the tooth surface of each raw rack teeth 10 is constrained by the teeth-forming concave and convex sections 28. Further, the surface pressure between the tooth surface of each raw rack teeth 10z and the surface of teeth-forming concave and convex portions 28 becomes high and the friction in the corresponding portions becomes large, the resistance against the movement of the metal material of the intermediate material 18 when the metal material moves to the width direction in each raw rack teeth 10z becomes large.

Therefore, in order to surely move the excess material to the both side sections in the width direction of each raw rack teeth 10z, the pressing force of the teeth-forming punch 27 needs to be large. Especially, when the volume of the intermediate material 18 is larger than the predetermined value due to the variation in manufacturing material 14, there is a need to make the pressing force of the teeth-forming punch 27 sufficiently large. As a result, problems occur such as the processing device becomes large and the manufacturing cost of the rack 9 raise.

JP 2009-178716 (A) describes that it is possible to prevent to cause damage such as cracks to the die used for forging by forming the die to be dividable in a direction to be apart from each other.

Taking the situation above into consideration, the object of the present invention is to provide a method for manufacturing a rack for which the manufacturing cost can be reduced.

### [Means for Solving the Problems]

The method for manufacturing a metal rack of the present invention comprises a preforming process, a teeth-forming process, and a finishing forming process. In the preforming process, an intermediate material having a round rod-like shape and a concave groove which extends in the axial direction at a part in the radial direction of the outer circumferential surface and is recessed inward in the radial direction, is obtained. In the teeth-forming process, a plurality of raw rack teeth are formed on the surface opposite to the concave grove with respect to the radial direction by pressing the teeth forming concave and convex portions having a concave and convex shape with respect to the axial direction of the outer circumferential surface of the intermediate material in a state that the portions on both sides of the concave groove with respect to the circumferential direction of the outer circumferential surface of the intermediate material is constrained and the inner surface of the concave groove is not constrained. In the finishing forming process, finishing forming is performed to the raw rack teeth to form rack teeth.

Here, the cross-sectional shape of the concave groove provided in the intermediate material may be constant or not constant in the axial direction.

It is preferable to form the concave groove by plastic working. However, it is also possible to form the concave groove by cutting process, or, it is also possible to form it at the same time of manufacturing the intermediate material by casting.

It is preferable to form the concave groove so as to be a size that does not disappear even after forming the rack teeth. In this case, it is possible to provide a knockout pin to the teeth-forming die for constraining the portions on both sides of the concave groove and to further provide a process to push the bottom surface of the concave groove in a state after forming the rack teeth by the knockout pin.

The teeth-forming die for constraining the portions on both sides of the concave groove can be constructed by a split die which comprises a pair of die elements, and the butted portion of the pair of die elements can be disposed outward in the radial direction of the concave groove.

The length in the axial direction of the concave groove can be longer than the length in the axial direction of the portion where the rack teeth are formed.

A possible rack manufactured by the method of the present invention comprises a plurality of rack teeth on one side in the radial direction of the outer circumferential surface and has a concave groove that extends in the axial direction in a portion which is on the opposite side in the radial direction to the rack teeth of the outer circumferential surface.

The steering device manufactured by the method of the present invention comprises a steering shaft, and a steering gear unit having an input shaft which rotates together with the rotation of the steering shaft and has a pinion tooth section provided on the outer circumferential surface and a rack which has a plurality of rack teeth that engage with the pinion tooth section, in which the rack is manufactured by the method of the present invention.

The vehicle manufactured by the method of the present invention comprises a steering device manufactured by the method of the present invention.

A possible preforming die for manufacturing a rack is used for an upsetting process that crushes a material made of metal and having a round rod-like shape in the radial direction, and comprises a cavity and a projection provided on the inner surface of the cavity for forming a concave groove that extends in the axial direction in a part in the radial direction of the outer circumferential surface of the round rod-like shaped material.

### [Effect of Invention]

According to the present invention described above, it is possible to reduce the cost for manufacturing a rack.

### BRIEF DESCRIPTION OF DRAWINGS

FIG. 1 is a partial cross-sectional side view illustrating a steering gear unit.
FIG. 2 is a partial cross-sectional front view illustrating a steering gear unit.
FIG. 3 is a cross sectional view taken along the line a-a of FIG. 1.
FIG. 4(A) is a plan view of the principal part of the rack of an example of an embodiment of the present invention, and FIG. 4(B) is a cross sectional view taken along the line b-b of FIG. 4(A), and FIG. 4(C) is a cross sectional view taken along the line c-c of FIG. 4(A).
FIG. 5(A) through FIG. 5(D) are cross sectional views illustrating the method for manufacturing a rack of an example of an embodiment of the present invention in the process sequence.
FIG. 6(A) is a plan view illustrating the principal part of the intermediate material of an example of an embodiment of the present invention, FIG. 6(B) is a cross sectional view taken along the line d-d of FIG. 6(A), and FIG. 6(C) is a cross sectional view taken along the line e-e of FIG. 6(A).
FIG. 7(A) through FIG. 7(C) are cross sectional views illustrating three examples of the cross-sectional shape of the concave groove applied to the intermediate material of one example of an embodiment of the present invention.
FIG. 8 is an enlarged cross-sectional perspective view illustrating principle portions and showing a state of taking the rack out from the die in an example of an embodiment of the present invention.
FIG. 9 is a partial cross sectional view of an example of a conventional construction of a steering device for an automobile provided with a steering gear incorporating a rack manufactured by the present invention.
FIG. 10 is a perspective view of an example of a conventional construction of a rack.
FIG. 11 is a view from the allow direction of "f' of FIG. 10.
FIG. 12 is a view from the allow direction of "g" of FIG. 10.
FIG. 13 is an enlarged cross sectional view taken along the line h-h of FIG. 12.
FIG. 14(A) through FIG. 14(F) are cross sectional views that illustrate an example of the method for manufacturing a rack of a conventional construction in the process sequence.
FIG. 15(A) is a partial perspective view illustrating the configuration of the raw rack teeth before the finishing forming process in an example of the method for manufacturing a rack of a conventional construction, and FIG. 15(B) is a partial perspective view illustrating the configuration of the rack teeth after the finishing forming process.

### MODES FOR CARRYING OUT THE INVENTION

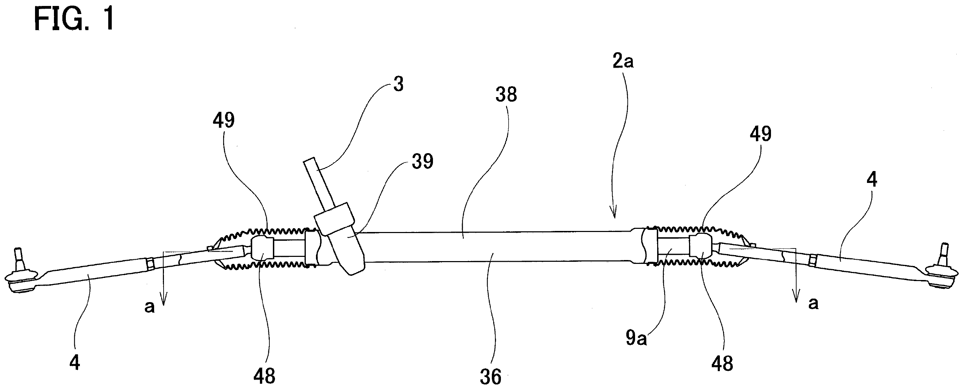

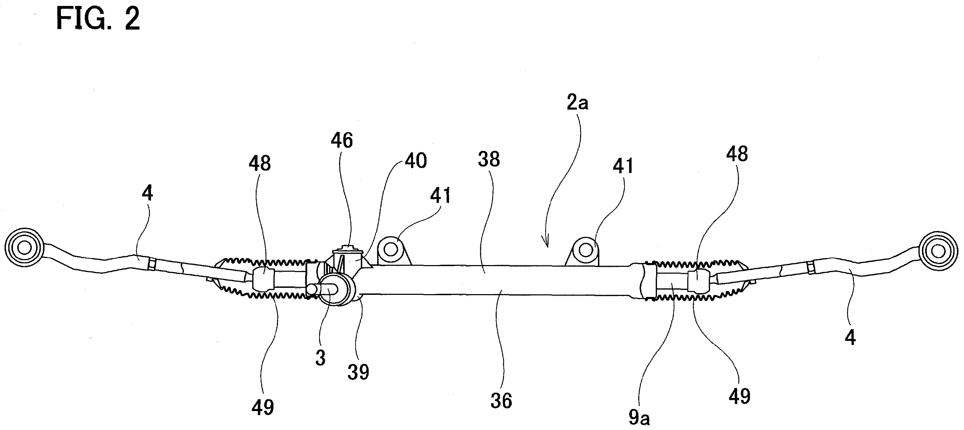

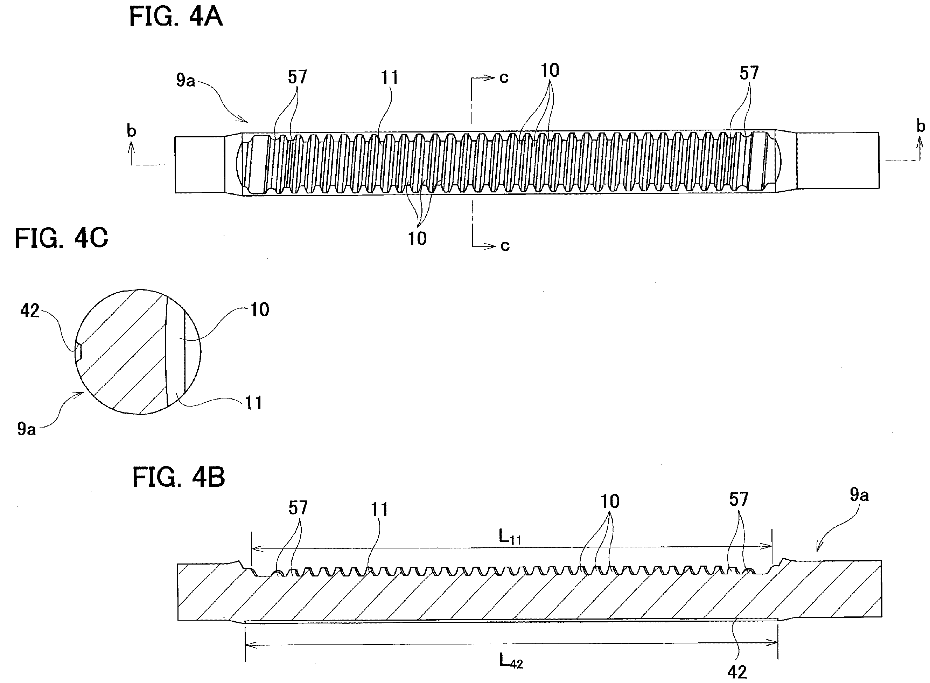

FIG. 4A through FIG. 8 illustrate an example of an embodiment of the present invention. FIG. 1 through FIG. 3 illustrate a steering gear unit 2a which is applicable to a steering device of an automobile such as shown in FIG. 9. The steering gear unit 2a is constructed so as to transform a rotary motion of the input shaft 3 to a linear motion of the rack 9a and to push and pull a pair of tie rods 4. The steering gear unit 2a of this example comprises a housing 36, a rack 9a, an input shaft 3, and a pressing device 37.

The housing 36 is formed by die casting light alloy such as an aluminum alloy, and comprises a main housing section 38, a sub-housing section 39, and a cylinder section 40. The main housing section 38 has a cylindrical shape and is opened at the both end sections in the axial direction (left and right direction in FIGs. 1-3). The sub-housing section 39 has a center axis which is in a skewed position with respect to the center axis of the main housing section 38, and the intermediate section in the axial direction is opened to one side section (left side section in FIGs. 1-3) of the main housing section 38. The cylinder section 40 is provided in a portion in the one side section of the main housing section 38 on the opposite side in the radial direction of the position where the sub-housing section 39 is opened. This housing 36 is supported by and fastened to a vehicle body by bolts that are inserted or screwed into a pair of mounting flanges 1 that are provided in two positions that are spaced in the axial direction on the outer circumferential surface of the main housing section 38.

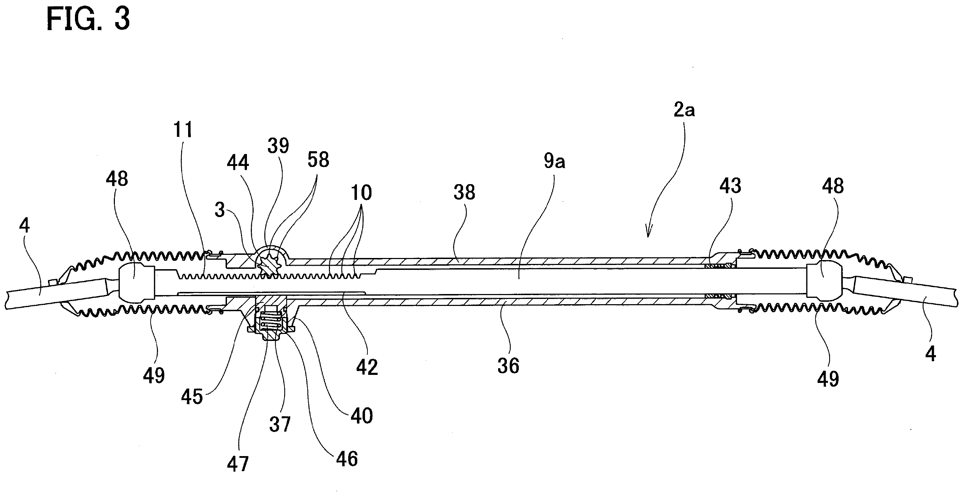

As illustrated in FIG. 3 and FIG. 4(A) through FIG.4(C), the rack 9a is made of metal such as carbon steel and stainless steel, and has rack teeth section 11 comprising a plurality of rack teeth 10 that are uniformly spaced in the axial direction on the front side surface (upper side surface of FIG. 4(B)) of the one side section in the axial direction. Except for the one side section in the axial direction where the rack teeth section 11 are provided, the rack 9a has an outer circumferential surface which is a cylindrical surface, and the entire body is constructed to be a rod-like shape. The rack 9a is supported on the inner diameter side of the main housing section 38 to be able to be displaced in the axial direction with respect to the main housing section 38 by providing a bush 43 between the outer circumferential surface in the other side section in the axial direction (right side section of FIG. 3) of the rack 9a and the inner circumferential surface in the other side section in the axial direction of the main housing section 38 of the housing 36. The dimension in the axial direction of the rack 9a is larger than the dimension in the axial direction of the main housing section 38, and in a state where the rack 9a is supported on the inner diameter side of the main housing section 38, the both end sections in the axial direction of the rack 9a protrude from the openings on the both sides in the axial direction of the main housing section 38.

The rack teeth section 11 have dummy teeth 57 which have shorter length than that of the rack teeth 10 and the dummy teeth do not engage with the pinion teeth of the input shaft 3 which will be explained later when in use. Further, the rack 9a has a concave groove 42 on the rear side surface of the one side section in the axial direction that extends in the axial direction and is recessed inward in the radial direction. In this example, the dimension in the axial direction L₄₂ of the concave groove 42 is larger than the dimension in the axial direction L₁₁ of the rack teeth section 11.

As illustrated in FIG. 3, the input shaft 3 comprises a pinion teeth section 44 on the outer circumferential surface of the tip end section where a plurality of pinion teeth 58 are uniformly spaced in the circumferential direction. The tip end section of the input shaft 3 is supported on the inner diameter side of the sub-housing section 39 so as to be rotatable with respect to the sub-housing section 39 in a state where the pinion teeth 58 of the pinion teeth section 44 are engaged with the rack teeth 10 of the rack teeth section 11. The base end section of the input shaft 3 protrudes from the upper side opening of the sub-housing section 39.

The pressing device 37 comprises a pressing block 45 that is fitted in the cylinder section 40, a cover 46 that is screwed to the rear side opening section of the cylinder section 40, a spring 47 provided between the pressing block 45 and the cover 46. The pressing device 37 elastically presses the rack 9a toward the input shaft 3 via the pressing block 45 due to the elasticity of the spring 47. Because of this, while backlash between the rack teeth 10 and the pinion teeth 58 is prevented, the state of engagement of the engaging section between the rack teeth 10 and the pinion teeth 58 is maintained properly.

The base end sections of a pair of tie rods 4 are connected to the both end sections in the axial direction of the rack 9a via spherical joints 48. The circumference of each of the spherical joints 48 is covered with bellows 49.

When the input shaft 3 is rotated by operating the steering wheel 1 (see FIG. 9), the rotation of the input shaft 3 is converted into a linear motion of the rack 9a by the engagement of the rack teeth 10 and the pinion teeth 58 so that the rack 9a is displaced in the axial direction. Then, a pair of tie rod 4 that is connected to the both end sections in the axial direction of the rack 9a is pushed and pulled so as to apply a steering angle to a pair of steered wheels.

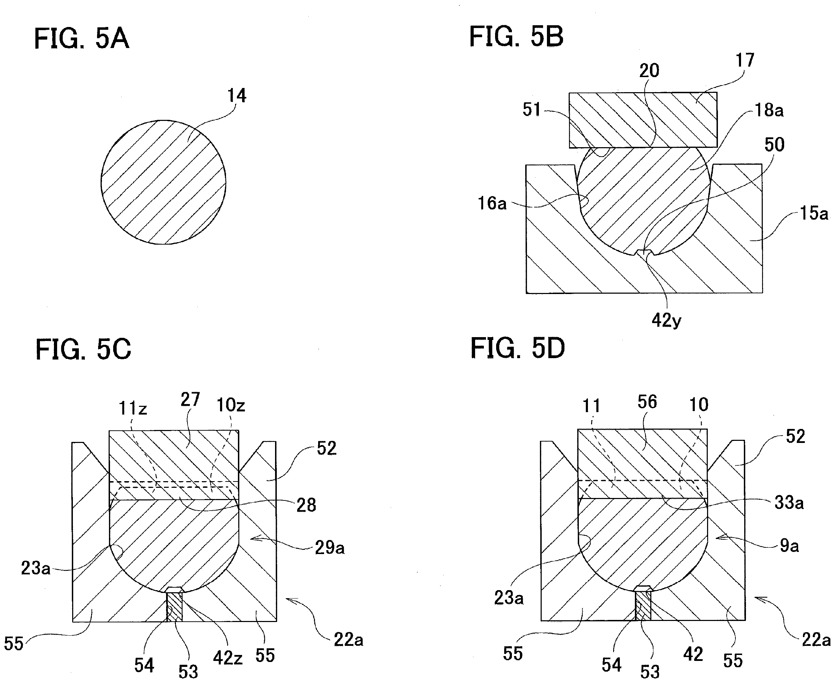

Next, the method for manufacturing the rack 9a of this example will be explained with reference to FIG. 5 through FIG. 8. First, by cutting a long bar material having a circular cross-section into certain length, material 14 having a round rod-like shape such as illustrated in FIG. 5(A) is obtained.

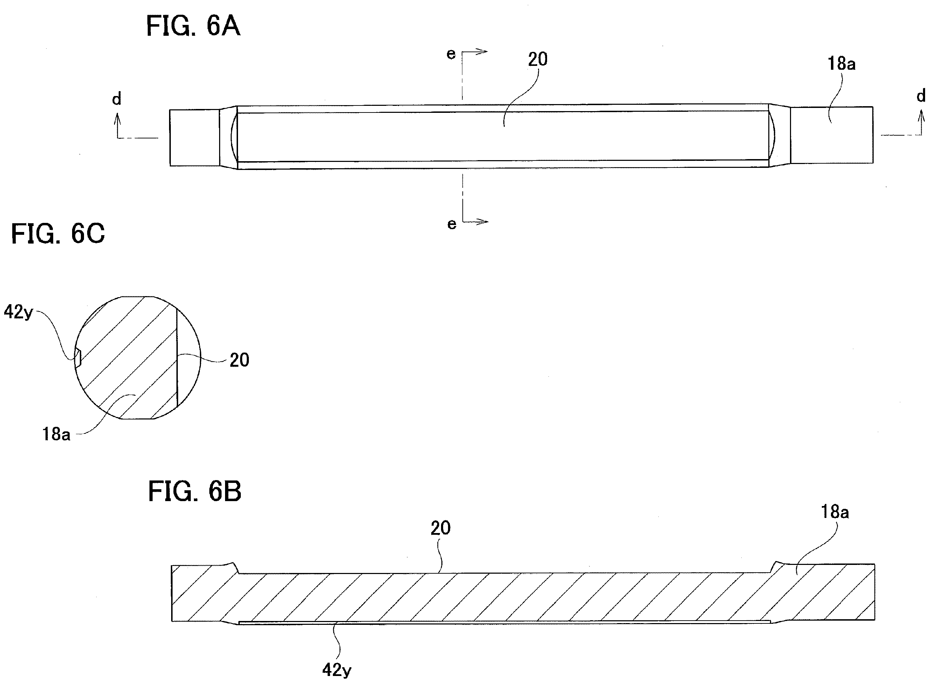

In the preforming process, as illustrated in FIG. 5(B), the material 14 is processed into the intermediate material 18a such as illustrated in FIG. 6(A) through FIG. 6(C). The intermediate material 18a has a flat planar to-be-processed surface section 20 on one side surface (front side surface of FIG. 6(A), upper surface of FIG. 6(B), right side surface of FIG. 6(C)) of the one side section in the axial direction. Also, the intermediate material 18a has a concave groove 42 that extends in the axial direction and is recessed inward in the radial direction and becomes a concave groove 42 in a state where the rack 9a is completed is provided on the other side surface that is on the opposite side of the to-be-processed surface section 20 with respect to the radial direction of the outer circumferential surface of the one side section in the axial direction of the intermediate material 18a.

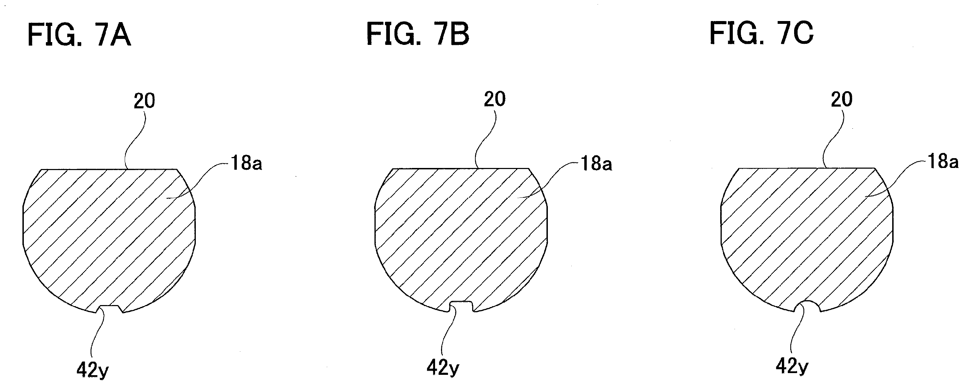

In this example, the cross-sectional shape of the concave groove 42y is made to be a trapezoid as shown in FIG. 7(A), the cross-sectional shape of the concave groove 42y is not specifically limited, so it can be any configuration such as rectangular as illustrated in FIG. 7 (B) or arcuate as illustrated in FIG. 7(C). Further, in this example, the cross-sectional shape of the concave groove 42y is made to be constant all the way in the axial direction, the cross-sectional shape of the concave groove 42y is not necessarily be constant all the way in the axial direction. For example, it is possible to make the cross-sectional area of the both end sections in the axial direction of the concave groove 42y be smaller than the cross-sectional area of the intermediate section in the axial direction of the concave groove 42y, or it is possible to make the cross-sectional shape of the both end portions in the axial direction thereof to be rectangular and to make the cross-sectional shape of the intermediate section in the axial direction thereof to be trapezoidal. In either case, the size and configuration of the concave groove 42y is set so that the concave groove 42 does not disappear from the rack 9a after forming the rack teeth section 11 by forging.

In the preforming process, processing the material 14 into the intermediate material 18a is performed by using the preforming die 15a and the punch for preforming 17. The preforming die 15a has an approximate U-shaped cross section and a first cavity 16a which is opened at the upper section. The first cavity 16a has a ridge 50 that extends in the axial direction in the center section of the bottom surface. The punch for preforming 17 has a flat planar pressing surface 51 on the tip end surface (the bottom surface of FIG. 5(B)).

In the preforming process, first, the one side section in the axial direction of the material 14 is set in the first cavity 16a of the preforming die 15a. Then, the punch for preforming 17 is displaced in the up-down direction, and by the punch for preforming 17, the one side section in the axial direction of the material 14 is pressed into the first cavity 16. In this way, the upsetting process is performed where the one side section in the axial direction of the material 14 is crushed between the inner surface of the first cavity 16a and the pressing surface 51 of the punch for preforming 17. When performing this upsetting process, the portion which has been pressed by the pressing surface 51 becomes the to-be-processed surface section 20 and the portion which has been pressed by the ridge 50 becomes the concave groove 42y.

In the teeth-forming process, as illustrated in FIG. 5(C), the intermediate material 18a is processed into the raw rack 29a by forming raw rack teeth section 11a comprising a plurality of raw rack teeth 10z on the to-be-processed surface section 20 of the intermediate material 18a by cold forging. Here, the raw rack teeth section 11z is a section that becomes rack teeth section 11 in a state where the rack 9a is finished. Each of the raw rack teeth 10z of the raw rack teeth section 11z has an insufficient accuracy of form and insufficient accuracy of dimension, and has a sharp end edge between the tooth surface and the tooth tip circle.

In the teeth-forming process, processing the intermediate material 18a into the raw rack 29a is performed by using the teeth-forming die 22a and the teeth-forming punch 27.

The teeth-forming die 22a comprises a die body 52 and a knockout pin 53. The die body 52 has an approximate U-shaped cross section, and comprises a second cavity 23a that is open at the upper section and a through hole 54 which passes through the die body 52 in the up-down direction and is open at the upper end section to the center section in the bottom surface of the second cavity 23a. In this example, the die body 52 is constructed by combining a pair of die elements 55 so as to be able to be divided in the horizontal direction (the left and right direction of FIG. 5(C)). Therefore, as will be explained later, as the one side section in the axial direction of the intermediate material 18a is pressed by the teeth-forming punch 27 and the to-be-processed surface section 20 of the intermediate material 18a is plastically deformed, excessive stress in a direction going away from each other with respect to the teeth-forming punch 27 is applied on the inner surface of the second cavity 23a so that the pair of die elements 55 is slightly displaced in a direction going away from each other. This construction makes it possible to absorb the excessive stress and prevent occurrence of damages such as cracks to the die body 52.

In this example, the upper end section of the butted portion 59 of the pair of die elements 55 is located in the center in the bottom surface of the second cavity 23a. With this configuration, in a state where the one side section in the axial direction of the intermediate material 18a is pressed into the second cavity 23a, the butted portion 59 is located outward in the radial direction of the concave groove 42y.

The knockout pin 53 is fitted in and attached to the through hole 54 so as to be able to be displaced in the up-down direction with respect to the die body 52. In this example, the width dimension in the horizontal direction of the opening portion of the concave groove 42y is made to be sufficiently larger than the width dimension in the horizontal direction of the knockout pin 53. That is, as will be explained later, the size and shape of the concave groove 42y is set so that the concave groove 42 does not disappear even after performing plastic working to the intermediate material 18, and preferably so that the width of the concave groove 42 is maintained in the rack 9a finally obtained and insertion of the knockout pin 53 to the concave groove 42 is possible even if the concave groove 42 is deformed. With this construction of the concave groove 42, it is possible to press the inner surface of the concave groove 42 by the tip end surface of the knockout pin 53 when removing the finished rack 9a from the second cavity 23a.

The teeth-forming punch 27 comprises a teeth-forming concave and convex section 28 on the tip end surface (the bottom surface of FIG. 5(C)) that has a shape that corresponds to the raw rack teeth section 11z to be obtained, that is, that has a concave and convex configuration where concave and convex are reversed in relation to the concave and convex configuration of the raw rack teeth section 11z.

In the teeth-forming process, first, the one side section in the axial direction of the intermediate material 18a is set in the second cavity 23a of the teeth-forming die 22a. Next, the teeth-forming punch 27 is displaced downward so as to press the to-be-processed surface section 20 downward with the teeth-forming concave and convex section 28, and press the one side section in the axial direction of the intermediate material 18a into the second cavity 23a. In a state where the one side section in the axial direction of the intermediate material 18a is pressed into the second cavity 23a, and the bottom surface of the one side section in the axial direction of the intermediate material 18a come in contact with the bottom surface of the second cavity 23a, portions on both sides of the concave groove 42y of the outer circumferential surface of the intermediate material 18a are constrained with respect to the circumferential direction. In other words, portions except for the lower end section where the concave groove 42y is formed and the to-be-processed surface section 20 of the outer circumferential surface of the one side section in the axial direction of the intermediate material 18a are constrained. Therefore, in a state where the one side section in the axial direction of the intermediate material 18a is pressed into the second cavity 23a, the inner surface of the concave groove 42y of the outer circumferential surface of the intermediate material 18a is not constrained.

Next, the teeth-forming punch 27 is further displaced downward and the teeth-forming concave and convex section 28 is pressed to the to-be-processed surface section 20 of the intermediate material 18a so that the to-be-processed surface section 20 is plastically deformed and the raw rack teeth section 11z is formed on the to-be-processed surface section 20, and thereby the raw rack 29a is obtained. In this example, in the teeth forming process, as the raw rack teeth section 11z is formed, the excess material be pushed out from the section that becomes the tooth bottom goes to the concave groove 42y and the both side sections in the width direction of each rack teeth 10z. Therefore, the concave groove 42y is deformed by the escaped excess material and becomes a concave groove 42z.

In the finishing forming process, as illustrated in FIG. 5(D), the rack 9a is obtained by adjusting the configuration of the raw rack teeth section 11z of the raw rack 29a. The operation of processing the raw rack 29a into the rack 9a is performed by using the teeth-forming die 22a and the punch 56 for finishing forming. The punch 56 for finishing forming comprises a finishing forming concave and convex section 33a on the tip end surface (the bottom surface of FIG. 5(D)) that has a concave and convex configuration that corresponds to the configuration of the rack teeth section 11 to be obtained, in other words, the concave and convex configuration is reversed in relation to the concave and convex configuration of the finished rack teeth section 11.

In the finishing forming process, the punch 56 for finishing forming is displaced downward and the finishing forming concave and convex section 33a is pressed to the raw rack teeth section 11z. By doing this, while adjusting the configuration and dimension of each of the rack teeth 10a of the raw rack teeth section 11z, the rack 9a is obtained by forming chamfer on the end edges of each of the raw rack teeth 10z and making the raw rack teeth section 11z to be the rack teeth section 11. Here, the excess material that was formed in the finishing forming process due to the adjustment of the configuration of each raw rack teeth 10z also goes to the concave groove 42z and both side sections in the width direction of each rack teeth 10z. As a result, the concave groove 42z is deformed by the escaped excess material and becomes a concave groove 42.

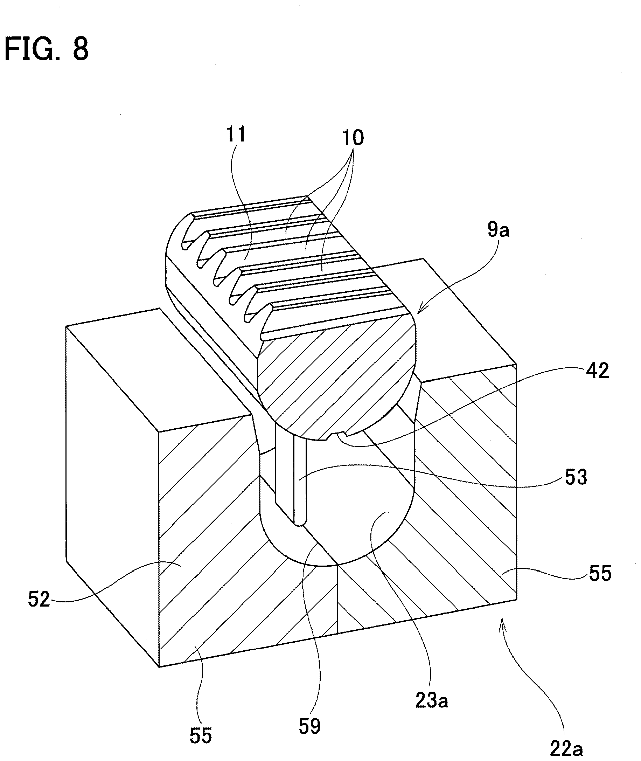

As illustrated in FIG. 8, the knockout pin 53 is raised and the inner surface of the concave groove 42 is pushed upward by the tip end surface (the upper end surface in FIG. 5(D)) of the knockout pin 53 to remove the finished rack 9a from the second cavity 23a. After that, it is possible to perform finishing process such as polishing if necessary.

In accordance with this example, it is possible to reduce the cost of manufacturing the rack 9a. That is, in the teeth forming process, as the raw rack teeth section 11z are formed, part of the excess material being pushed out from the section that becomes the tooth bottom goes to the concave groove 42y which exists on the front side in the pressing direction of the teeth-forming punch 27. Therefore, when comparing with the case where the excess material be pushed out due to the formation of the rack teeth section 11 is moved only to the both side sections in the width direction of each rack teeth 10, it is possible to suppress or reduce the resistance against the movement of the metal material of the intermediate material 18a. Especially, even when the volume of the intermediate material 18a is larger than the predetermined value due to the variation in manufacturing the material 14, it is possible to absorb the variation in the volume of the intermediate material 18a by moving the excess volume to the concave groove 42y. As a result, it is possible to prevent the processing device from becoming large and minimize the cost for manufacturing the rack 9a.

Further, in this example, when removing the finished rack 9a from the second cavity 23a, the inner surface of the concave groove 42 is pushed by the tip end surface of the knockout pin 53. Therefore, it is possible to prevent formation of impression by the knockout pin 53 formed on a section of the rear surface of the rack 9a which slides with the tip end surface of the pressing block 45 (see FIG. 3) in a state where it is assembled in the steering gear unit 2. Further, the excess material of the intermediate material 18a or the raw rack 29a moves to the concave grooves 42y and 42z, it is also possible to prevent a burr from being formed in the rear surface of the rack 9a as the excess material moves into the space between the outer circumferential surface of the knockout pin 53 and the inner circumferential surface of the through hole 54.

Further, in this example, the butted portion 59 of a pair of die elements 55 of the die body 52 is located outward in the radial direction of the concave groove 42. Because the excess material of the intermediate material 18a or the raw rack 29a moves to the concave grooves 42y and 42z when forming the raw rack teeth section 11z or finishing molding, it is possible to prevent the excess material from moving into the clearance between the pair of die elements 55 and forming a convex portion in the corresponding section. Therefore, it is possible to prevent the grinding amount in the grinding or polishing after the finishing forming process from being increased.

In this example, the same teeth-forming die 22a is used in the teeth-forming process and the finishing forming process. That is, the configuration of the raw rack teeth 10z is adjusted by finishing forming with the punch 56 for finishing forming in a state where the raw rack 29a is retained inside the second cavity 23a without removing the raw rack 29a being retained in the second cavity 23a of the teeth-forming die 22a after the teeth-forming process. However, it is also possible to use a different die in the teeth-forming process and the finishing forming process.

In this example, in the preforming process, at the same time when the one side surface of the one side section in the axial direction of the intermediate material 18a is pressed by the pressing surface 51 of the punch 17 for preforming so as to form the flat planar to-be-processed surface section 20, the other side surface that is on the opposite side of the to-be-processed surface section 20 of the one side section in the axial direction of the intermediate material 18a is pressed by the ridge 50 so as to form the concave groove 42y. However, it is also possible to form the concave groove 42y of the intermediate material 18a by cutting process or forging and the like before or after the upsetting process for forming the to-be-processed surface section 20.

In this example, the finished rack 9a is removed from the second cavity 23a by pressing the bottom surface of the concave groove 42 with the knockout pin 53. However, it is also possible to omit the knockout pin and use a dividable die comprising a plurality of die elements so as to remove the finished rack by separating the die elements of the dividable die. In this case as well, the butted portion of the die elements is located outward in the radial direction of the concave groove.

The configuration of the concave groove 42 of the rack 9a that is obtained by the manufacturing method of this example is deformed from the configuration of the concave groove 42y in the intermediate material 18a as it goes through process of plastic working. Further, each rack 9a that is eventually obtained as a product has a concave groove 42 that has a varied configuration. That is, due to the effect of variation in its characteristics such as its size, configuration, and hardness of the material 14, how and to what extent the concave groove 42y deforms may vary in the process of processing the material 14 into the rack 9a, so that the configuration of the concave groove 42 of the finished rack 9a varies for each rack 9a. For example, the edge sections on both sides of the concave groove 42 may be curved that is different for each rack 9a. Here, by using the difference of the configuration of the concave groove 42, it is also possible to use an image of the concave groove 42 or the data obtained by measuring the three-dimensional shape of the concave groove 42 to individually identify the rack 9a.

### [Explanation of Reference Numbers]

- 1: Steering wheel
- 2, 2a: Steering gear unit
- 3: Input shaft
- 4: Tie rod
- 5: Steering shaft
- 6: Steering column
- 7a, 7b: Universal joint
- 8: Intermediate shaft
- 9, 9a: Rack
- 10, 10z: Rack teeth
- 11, 11z: Rack teeth section
- 12: Rear portion
- 13: Circular rod section
- 14: Material
- 15, 15a: Preforming die
- 16, 16a: First cavity
- 17: Punch for preforming
- 18,18a: Intermediate material
- 19: Partial cylindrical surface
- 20: To-be-processed surface section
- 21: Curved surface section
- 22, 22a, 22b: Teeth-forming die
- 23, 23a: Second cavity
- 24: Bottom section
- 25: Inside surface
- 26: Inclined guide surface
- 27, 27a: Teeth-forming punch
- 28: Teeth-forming concave and convex portion
- 29, 29a: Raw rack
- 30: Flat surface section
- 31: Receiving die for finishing forming
- 32: Receiving-side cavity
- 33: Finishing forming concave and convex portion
- 34: Finishing forming die
- 35: Pressing-side cavity
- 36: Housing
- 37: Pressing device
- 38: Main housing section
- 39: Sub-housing section
- 40: Cylinder section
- 41: Mounting flange
- 42, 42y, 42z: Concave grooves
- 43: Bush
- 44: Pinion teeth section
- 45: Pressing block
- 46: Cover
- 47: Spring
- 48: Spherical joint
- 49: Bellows
- 50: Ridge
- 51: Pressing surface
- 52: Die body
- 53: Knockout pin
- 54: Through hole
- 55: Die element
- 56: Finishing forming punch
- 57: Dummy teeth
- 58: Pinion teeth
- 59: Butted portion

## Claims

1. A method for manufacturing a metal rack (9a) comprising:
a preforming process for obtaining a round rod-like shaped metal intermediate material (18a) having a concave groove (42y) on an outer circumferential surface of the intermediate material (18a), the concave groove (42y) extending in an axial direction of the intermediate material (18a) and being recessed inward in a radial direction of the intermediate material (18a),
a teeth-forming process for forming a plurality of raw rack teeth (11z) by pressing a teeth forming concave and convex section (28) having a concave and convex shape with respect to the axial direction on a surface on an opposite side of the concave groove (42y) with respect to the radial direction of the outer circumferential surface of the intermediate material (18a), in a state where portions on both sides of the concave groove (42y) with respect to a circumferential direction of the intermediate material (18a) on the outer circumferential surface of the intermediate material (18a) is constrained and an inner surface of the concave groove (42y) is not constrained, and
a finishing forming process for performing a finishing forming to the raw rack teeth (11z) to form rack teeth (11).

2. The method for manufacturing a metal rack (9a) according to Claim 1, wherein the concave groove (42y) is formed by plastic working.

3. The method for manufacturing a metal rack (9a) according to Claim 1 or 2, wherein the concave groove (42y) is formed to be a size so the concave groove (42) does not disappear even after the rack teeth (11) are formed on the surface on the opposite side of the concave groove (42z) with respect to the radial direction of the outer circumferential surface of the intermediate material (18a).

4. The method for manufacturing a metal rack (9a) according to Claim 3, wherein a teeth-forming die (22a) for constraining the portions on both sides of the concave groove (42y, 42z) is used and the teeth-forming die (22a) comprises a knockout pin (53), and the method further comprises a process for pushing a bottom surface of the concave groove (42z, 42) by the knockout pin (53) in a state where the raw rack teeth (11z) or the rack teeth (11) has been formed.

5. The method for manufacturing a metal rack (9a) according to any one of Claims 1 through 4, wherein the teeth-forming die (22a) for constraining the portions on both sides of the concave groove (42y, 42z) is a dividable die that comprises a plurality of die elements (55), and a butted portion between the die elements (55) is located outward in the radial direction of the concave groove (42y, 42z).

6. The method for manufacturing a metal rack (9a) according to any one of Claims 1 through 5, wherein the concave groove (42y) is formed so that a length in the axial direction of the concave groove (42y, 42z, 42) becomes longer than a length in the axial direction of a section where the rack teeth (11) are formed.

7. A method for manufacturing a steering device, the method comprising the step of manufacturing a rack by the method for manufacturing a metal rack (9a) according to any one of Claims 1 to 6, and the step of assembling said rack with a steering shaft (5); and
a steering gear unit (2a) comprising:
an input shaft (3) rotatable together with a rotation of the steering shaft (5) and having a pinion teeth section (44) on an outer circumferential surface of the input shaft (3);
said rack having a plurality of rack teeth that engages with the pinion teeth section (44).

8. A method for manufacturing a vehicle comprising a steering device, the method comprising the step of manufacturing a steering device by the method for manufacturing a steering device according to Claim 7, and the step of incorporating said steering device in said vehicle.

## Patentansprüche

1. Verfahren zum Herstellen einer Zahnstange (9a) aus Metall, das umfasst:
einen Vorform-Prozess zum Erzeugen eines Metall-Zwischenmaterials (18a) in Form eines runden Stabes mit einer konkaven Nut (42y) an einer Außenumfangsfläche des Zwischenmaterials (18a), wobei sich die konkave Nut (42y) in einer axialen Richtung des Zwischenmaterials (18a) erstreckt und in einer radialen Richtung des Zwischenmaterials (18a) nach innen vertieft ist,
einen Prozess zum Ausbilden von Zähnen, mit dem eine Vielzahl von Roh-Zähnen (11z) der Zahnstange durch Pressen eines konkaven und konvexen Abschnitts (28) zum Formen von Zähnen mit einer konkaven und konvexen Form in Bezug auf die axiale Richtung auf eine Fläche an einer gegenüberliegenden Seite der konkaven Nut (42y) in Bezug auf die radiale Richtung der Außenumfangsfläche des Zwischenmaterials (18a) in einem Zustand ausgebildet wird, in dem Abschnitte an beiden Seiten der konkaven Nut (42y) in Bezug auf eine Umfangsrichtung des Zwischenmaterials (18a) an der Außenumfangsfläche des Zwischenmaterials (18a) eingeschränkt sind und eine Innenfläche der konkaven Nut (42y) nicht eingeschränkt ist, sowie
einen Fertigform-Prozess zum Durchführen eines Fertigformens der Roh-Zähne (11z) der Zahnstange, um Zähne (11) der Zahnstange auszubilden.

2. Verfahren zum Herstellen einer Zahnstange (9a) aus Metall nach Anspruch 1, wobei die konkave Nut (42y) durch Umformen ausgebildet wird.

3. Verfahren zum Herstellen einer Zahnstange (9a) aus Metall nach Anspruch 1 oder 2, wobei die konkave Nut (42y) so ausgebildet wird, dass sie eine Größe hat, durch die die konkave Nut (42) auch dann nicht verschwindet, nachdem die Zähne (11) der Zahnstange an der Fläche an der gegenüberliegenden Seite der konkaven Nut (42z) in Bezug auf die radiale Richtung der Außenumfangsfläche des Zwischenmaterials (18a) ausgebildet sind.

4. Verfahren zum Herstellen einer Zahnstange (9a) aus Metall nach Anspruch 3, wobei ein Zahn-Formwerkzeug (22a) zum Einschränken der Abschnitte an beiden Seiten der konkaven Nut (42y, 42z) eingesetzt wird und das Zahn-Formwerkzeug (22a) einen Auswerferstift (53) umfasst, und das Verfahren des Weiteren einen Prozess umfasst, mit dem auf eine Bodenfläche der konkaven Nut (42z, 42) durch den Auswerferstift (53) in einem Zustand gedrückt wird, in dem die Roh-Zähne (11z) der Zahnstange oder die Zähne (11) der Zahnstange ausgebildet worden sind.

5. Verfahren zum Herstellen einer Zahnstange (9a) aus Metall nach einem der Ansprüche 1 bis 4, wobei das Zahn-Formwerkzeug (22a) zum Einschränken der Abschnitte an beiden Seiten der konkaven Nut (42y, 42z) ein teilbares Formwerkzeug ist, das eine Vielzahl von Formwerkzeug-Elementen (55) umfasst, und ein stumpf gestoßener Abschnitt zwischen den Formwerkzeug-Elementen (55) in der radialen Richtung der konkaven Nut (42y, 42z) außerhalb angeordnet ist.

6. Verfahren zum Herstellen einer Zahnstange (9a) aus Metall nach einem der Ansprüche 1 bis 5, wobei die konkave Nut (42y) so ausgebildet ist, dass eine Länge in der axialen Richtung der konkaven Nut (42y, 42z, 42) größer wird als eine Länge in der axialen Richtung eines Abschnitts, in dem die Zähne (11) der Zahnstange ausgebildet sind.

7. Verfahren zum Herstellen einer Lenkvorrichtung, wobei das Verfahren den Schritt des Herstellens einer Zahnstange mit dem Verfahren zum Herstellen einer Zahnstange (9a) aus Metall nach einem der Ansprüche 1 bis 6 sowie den Schritt zum Zusammenbauen der Zahnstange mit einer Lenkwelle (5) umfasst; sowie
einer Lenkgetriebe-Einheit (2a), die umfasst:
eine Antriebswelle (3), die zusammen mit einer Drehung der Lenkwelle (5) gedreht werden kann und einen Ritzel-Zahnabschnitt (44) an einer Außenumfangsfläche der Antriebswelle (3) aufweist;
wobei die Zahnstange eine Vielzahl von Zähnen der Zahnstange aufweist, die mit dem Ritzel-Zahnabschnitt (44) in Eingriff sind.

8. Verfahren zum Herstellen eines Fahrzeugs, das eine Lenkvorrichtung umfasst, wobei das Verfahren den Schritt des Herstellens einer Lenkvorrichtung mit dem Verfahren zum Herstellen einer Lenkvorrichtung nach Anspruch 7 sowie den Schritt zum Einbauen der Lenkvorrichtung in das Fahrzeug umfasst.

## Revendications

1. Procédé de fabrication d'une crémaillère métallique (9a) comprenant :
un processus de préformage pour obtenir un matériau métallique intermédiaire en forme de tige ronde (18a) présentant une rainure concave (42y) sur une surface circonférentielle externe du matériau intermédiaire (18a), la rainure concave (42y) s'étendant dans une direction axiale du matériau intermédiaire (18a) et étant renfoncée vers l'intérieur dans une direction radiale du matériau intermédiaire (18a),
un processus de formation de dents pour former une pluralité de dents de crémaillère brutes (11z) en pressant une section de formation de dents concave et convexe (28) ayant une forme concave et convexe par rapport à la direction axiale sur une surface d'un côté opposé de la rainure concave (42y) par rapport à la direction radiale de la surface circonférentielle externe du matériau intermédiaire (18a), dans un état où des portions des deux côtés de la rainure concave (42y) par rapport à une direction circonférentielle du matériau intermédiaire (18a) sur la surface circonférentielle externe du matériau intermédiaire (18a) est contrainte et une surface interne de la rainure concave (42y) n'est pas contrainte, et
un processus de formage de finition pour mettre en œuvre un formage de finition sur les dents de crémaillère brutes (11z) pour former des dents de crémaillère (11).

2. Procédé de fabrication d'une crémaillère métallique (9a) selon la revendication 1, dans lequel la rainure concave (42y) est formée par usinage plastique.

3. Procédé de fabrication d'une crémaillère métallique (9a) selon la revendication 1 ou 2, dans lequel la rainure concave (42y) est formée pour avoir une taille telle que la rainure concave (42) ne disparaisse pas même après que les dents de crémaillère (11) sont formées sur la surface sur le côté opposé de la rainure concave (42z) par rapport à la direction radiale de la surface circonférentielle externe du matériau intermédiaire (18a).

4. Procédé de fabrication d'une crémaillère métallique (9a) selon la revendication 3, dans lequel une matrice de formation de dents (22a) pour contraindre les portions des deux côtés de la rainure concave (42y, 42z) est utilisée et la matrice de formation de dents (22a) comprend une goupille d'éjection (53), et le procédé comprend en outre un processus pour pousser une surface de fond de la rainure concave (42z, 42) à l'aide de la goupille d'éjection (53) dans un état où les dents de crémaillère brutes (11z) ou les dents de crémaillère (11) ont été formées.

5. Procédé de fabrication d'une crémaillère métallique (9a) selon l'une quelconque des revendications 1 à 4, dans lequel la matrice de formation de dents (22a), pour contraindre les portions des deux côtés de la rainure concave (42y, 42z), est une matrice divisible qui comprend une pluralité d'éléments de matrice (55), et une portion aboutée entre les éléments de matrice (55) est située vers l'extérieur dans la direction radiale de la rainure concave (42y, 42z).

6. Procédé de fabrication d'une crémaillère métallique (9a) selon l'une quelconque des revendications 1 à 5, dans lequel la rainure concave (42y) est formée de telle sorte que la longueur dans la direction axiale de la rainure concave (42y, 42z, 42) devient supérieure à la longueur dans la direction axiale d'une section où les dents de crémaillère (11) sont formées.

7. Procédé de fabrication d'un dispositif de direction, le procédé comprenant l'étape de fabrication d'une crémaillère par le procédé de fabrication d'une crémaillère métallique (9a) selon l'une quelconque des revendications 1 à 6, et l'étape d'assemblage de ladite crémaillère avec
un arbre de direction (5) ; et
une unité d'engrenage de direction (2a) comprenant :
un arbre d'entrée (3) pouvant tourner conjointement à une rotation de l'arbre de direction (5) et ayant une section de dents de pignon (44) sur une surface circonférentielle externe de l'arbre d'entrée (3) ;
ladite crémaillère comportant une pluralité de dents de crémaillère qui s'engagent avec la section de dents de pignon (44).

8. Procédé de fabrication d'un véhicule comprenant un dispositif de direction, le procédé comprenant l'étape de fabrication d'un dispositif de direction par le procédé de fabrication d'un dispositif de direction selon la revendication 7, et l'étape d'incorporation dudit dispositif de direction dans ledit véhicule.
